**Europäisches Patentamt**

**European Patent Office**

**Office européen des brevets**

(19)

(11) Publication number : **0 389 525 B1**

(12) # EUROPEAN PATENT SPECIFICATION

(45) Date of publication of patent specification :
**22.01.92 Bulletin 92/04**

(51) Int. Cl.⁵ : **C10B 7/04,** C10B 47/38,
C10B 53/02

(21) Application number : **88910001.2**

(22) Date of filing : **31.10.88**

(86) International application number :
**PCT/DK88/00174**

(87) International publication number :
**WO 89/04354 18.05.89 Gazette 89/11**

(54) **METHOD AND APPARATUS FOR PRODUCTION OF A GAS FROM A COMMINUTED BIOLOGICAL WASTE MATERIAL.**

(30) Priority : **06.11.87 DK 5835/87**

(43) Date of publication of application :
**03.10.90 Bulletin 90/40**

(45) Publication of the grant of the patent :
**22.01.92 Bulletin 92/04**

(84) Designated Contracting States :
**AT BE CH DE FR GB IT LI LU NL SE**

(56) References cited :
**EP-A- 0 257 019**
**DE-A- 2 914 295**
**DE-A- 3 421 813**
**GB-B- 1 440 236**
**SE-B- 453 097**

(73) Proprietor : **DANSK TERMO INDUSTRI A/S**
**Industrivaenget 27**
**DK-3400 Hillerod (DK)**

(72) Inventor : **HANSEN, Erik**
**Baunevaenget 60**
**DK-3480 Fredensborg (DK)**

(74) Representative : **Hartley, David et al**
**Withers & Rogers 4 Dyer's Buildings Holborn**
**London, EC1N 2JT (GB)**

EP 0 389 525 B1

## Description

The present invention relates to a method for production of a gas from a comminuted biological waste material, such as straw, in which method the comminuted material is introduced into a reactor through a gastight lock possibly with af an addition of steam, and distributed into a reactor bed of catalytic bodies, which are agitated in such a way that the material during the gassification is flowing along a predeterminded path as the produced gas and the residual material are removed through the bottom of said bed. The invention also relates to an apparatus for performing the method.

From Swedish patent publication no. 453,097 a method of this type is known. In the disclosed apparatus biological waste material is introduced in some distance above the bottom grating of a vertical reactor, and during a pyrolytic process the material is carried upwards through the reactor together with a heated mass of rock particles including catalytic active limestone. Residual material is removed from the top of the reactor and is recycled to its bottom, where the residual material is serving as fuel for the heating of the rock particles, combustion air being introduced through the bottom grating of the reactor. The combustion air also serves to fluidize the biological mass in the reactor. Owing to the high temperature of the rock particles in the area in which the biological material is introduced, substantioal amounts of tar are produced, which, due to the catalytic effect of the limestone and a precise control of the temperature gradient of the process and observance of a predetermined low moisture content in the biological material, is prevented from following the gas. These conditions are difficult to comply with under practical conditions. Another drawback of the process is that the gas is mixed up with the flue gasses from the combustion providing the pyrolysis. The produced gas therefore has a relatively low calorific value, as the gas is containing $CO_2$ and $N_2$ in substantial amounts.

The use of a catalyst to improve the quality of the gas produced by manufacture of coke is known from German Patent Specification no. 2,914,295. In the known process nickel is added to the coal from which the gas is produced in an amount of 0.1 to 2.5 per cent of weight. According to the patent specification the contents of methane in the gas is increased so that the gas corresponds to natural gas. The nickel added to the coal is found after the process in the produced coke, from which it may be recovered by dissolving the metal in acid. If the catalyst is not recovered, the ash from the coke after burning will not be acceptable in environmental terms and disposal thereof will require special precautions to be taken.

From German "Offenlegungsschrift" no. 3,421, 813 it is known to gasify comminuted straw on a grating comprising a number of rods, on top of which grating a layer of ceramic bodies is arranged. The rods perform a reciprocating movement providing a conveyance of the ceramic bodies. The bodies form a sort of a self-cleaning grating, on which in a layer on and between the bodies the pyrolysis and combustion of the straw material takes place. Owing to the movement of the bodies the straw material is evenly distributed and the risk of uneven combustion over the surface of the grating is reduced.

In the discussed methods the pyrolysis takes place by introduction of a certain amount of combustion air into the material to be gasified. The combustion air is mixed into the produced gas, which will contain substantial amounts of $CO_2$ and $N_2$, which does not contribute to the calorific value of the gas and which reduces the obtainable combustion temperature. In order to obtain a high calorific value it is indispensable that the pyrolysis takes place in a closed reactor in order to prevent dilution of the produced gas. None of the known methods discloses a method for producing gas from comminuted biological materials without the addition of air from a combustion in part of the material. In a process, which is useful in practice, it is a condition that the formation of tar is suppressed, as the tar reduces the utility of the gas and is causing deposits in the reactor giving difficulties in the transmission of heat from an indirect heating to the biolociacal material.

The object of the invention is to provide a method of the type stated above, in which method the problems referred to are solved, so that a gas of high calorific value and without tar is produced, and in which method the surfaces for heat transmission are free from tar deposits, and in which the residual material from the gas production does not contain substantial amounts of compositions which are unacceptable to the environment.

According to invention this object is obtained in a method according to the characterizing clause of claim 1.

By means of the vibrating reactor bed with a filler comprising ceramic bodies as carriers for a catalyst the material is conveyed in an even flow downwards at the same time being gradually heated providing for a minimal formation of tar. The presence of the catalyst increases the pyrolysis which will take place at a temperature at which the formation of tar is suppressed. Typically, a reduction of the temperature of 200°C is obtained compared with known processes. The process will take place in a temperature interval in which formation of slag does not occur. The presence of a catalyst also contributes to converting components participating in formation of tar into a combustible gas. As the catalyst is incorporated into the ceramic bodies, it will remain in the reactor bed and will not pollute the ash from the biological material. The indirect heating of the reactor bed prevents a dilution of the gas with flue gasses from the heating and especially ensures that the atmosphere in the reactor bed is reduced, which prevents an oxydizing of the catalyst destroying its effect. The vibration of the reactor bed firstly provides the conveying of the material through the bed and secondly ensures the necessary contact between the material and the catalyst and thirdly improves the distribution of heat from the heating means to the material to support the process. The vibration is so important to the process, that if the vibration is dicontinued the process will stop after a very short time.

According to the invention a catylyst based on Ni has proved to be effective. The use of this specific metal increases the yield of methane in the produced gas.

In order to provide an effective conveyance of the comminuted material downwards through the reactor bed of catalyst containing bodies without excessive erosion of the bodies it is preferred according to the invention that the vibration has such a direction and such an intensity that the bed is fluidized. The comminuted material acts as a lubricant which substantially reduces the erosion at the points of contact of the filler bodies.

The residual part of the material not being converted into gas by the pyrolysis contains a considerable amount of carbon. This residual material may be converted into gas by further heating and addition of water, or according to the invention part of the material may be combusted in order to provider the necessary heat for supporting the pyrolysis.

The invention further relates to an apparatus for performing the method, which apparatus comprises a reactor cell with an inlet with a gastight lock for introducing the biological material into a reactor bed of filler bodies with catalytic action, which bed comprises means for agitating the bodies in such a way that the comminuted matetelial is conveyed along a predetermined path in the same direction as the gas flow during the gassification, residual material being removed at the bottom of the reactor. According to the invention the apparatus is characterized by the features according to claim 6.

Other features and advantages of the apparatus appear from the following specification.

The invention is described in detail in the following with reference to the drawing, in which

fig. 1 shows a section through an embodiment of the apparatus according to the invention, and

fig. 2 shows an alternative embodiment of an apparatus according to the invention, wherein a carbon containing residual is removed for separate treatment.

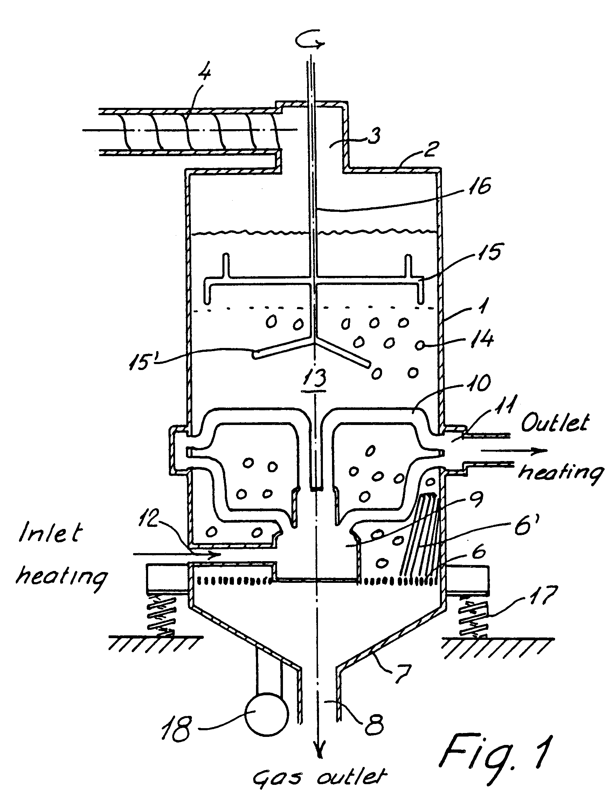

The apparatus shown in fig. 1 in the drawings is intended for the production of gas from comminuted biological waste material such as straw, rice husk, bark, nutshells or similar cellulose containing materials and comprises a reactor in the shape of a cylindrical container 1 with a vertical axis. For the production of gas other materials, which may be converted into gas, may be used or mixed into some of the mentioned waste materials or mixed with coal or peat. Moreover the apparatus may be used for pyrolysis from pure ordinary fuels, if no waste materials are available. The container is closed at the top by means of a cover 2, in which an inlet 3 for the comminuted material is arranged. The comminuted material is fed by means of a helical conveyor 4. Close to the lower end of the container a grating 6 is arranged, and below the grating the container is closed by means of a bottom 7 with a conical shape, in which bottom an outlet 8 for gas and ash is arranged. Part of the grating area is occupied by a heating element 9 with channels 10 for increasing the heating surface and forming an outlet for the heating medium. In order to increase the area, with which the grating 6 is facing the bed, the area is increased by means of a number of pyramid-shaped bodies 6' of grating, the purpose of which is to increase the area of grating compared with the cross section of the bed. This increase is obtained also in case the pyramid-shaped bodies in practice are mounted on a plane grating, if the mesh of the pyramids is finer or equal to the mesh of the grating below. These bodies may be provided with channels for the heating medium in order to maintain the same temperature at the bodies 6' as at the heating element. This arrangement is preferable, if a complete conversion of the organic material is to be performed in the reactor. In many cases it is practical to separate the process into a pyrolysis phase and a subsequent phase, in which the carbon produced by the pyrolysis is converted into gas in a separate process or burned to formation of heat energy, part of which may preferably be used in the pyrolysis phase.

The channels or tubes 10 are connected to an annular chamber 11 forming a common outlet for the heating medium. From the outside of the container there is an inlet 12 for the heating medium. The heating medium may be air and in a preferred embodiment a burner for gas or another suitable fuel. The heating also may be arranged with electrical heating elements. Then the inlet 12 and the outlet 11 for the heating medium are replaced by corresponding means for current supply. In the embodiment shown in fig. 1, which comprises a container with circular cross-section, the heating element and the tubes are shaped like a crown, but the shape may be changed in order to adapt the heating element to the shape of the bed of filler bodies. The purpose of the heating element is to maintain a temperature of 800-1000°C in a zone in the bed. This zone must comprise the complete cross-section of the bed and the zone should preferably have the same height over the whole area.

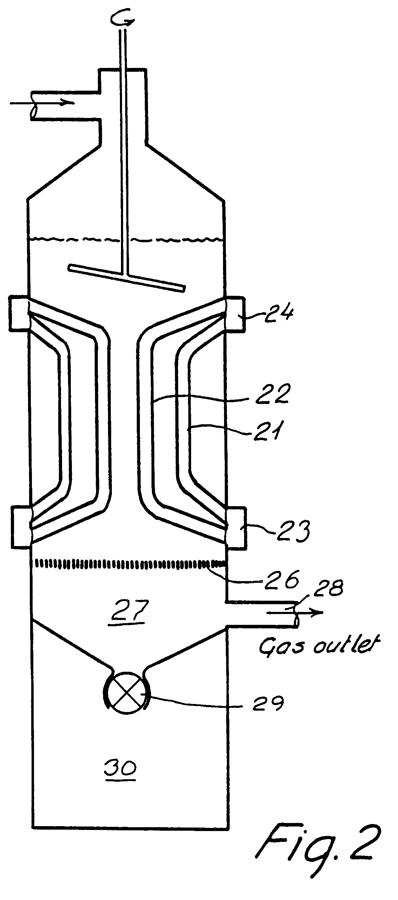

In an alternative embodiment shown in fig. 2 the heating elements are tubes 21,22 connecting an anuular inlet chamber 23 and an annular outlet chamber 24. The tubes are arranged in such a way that a substantial portion of the tubes is parallel with the axis of the container. The tubes will thereby contribute to the fluidization of the contents of the reactor of filling bodies and organic material. In the alternative embodiment a complete reforming of the organic material is not intended, but a residual material with a high content of carbon is removed through the grating 26 together with the gas produced by the pyrolysis. The residual and the gas is removed through a chamber 27 with a gas outlet 28. Through a substantially gastight lock 29 the residual is removed for separate treatment and/or combustion. In the alternative embodiment a temperature gradient from 200°C to 500°C in the zone between the outlet chamber 24 and the inlet chamber 23 is aimed at.

In both embodiments a bed 13 of filler bodies 14 of ceramic material containing a catalyst is arranged in the container. The filler bodies 14 are regularly shaped, for example as cylinders, so that the filler bodies in a random packing of the reactor bed 13 will form an open structure, through which the comminuted material may be distributed in the interspaces between the filler bodies. Above the bed 13 an agitator 15 or similar stirring means are arranged. The agitator 15 is rotated by means of a shaft 16, which is inserted into the container through the inlet 3. The agitator is acting in a zone of the reactor, in which the temperature does not exceed 100°C. The agitator is shown as a pair of rotating arms, but may be shaped otherwise depending of the cross-section of the reactor. The agitator may have one or more further arms 15', which stirs into the reactor bed ensuring thorough mixing of the comminuted material and the filler bodies. The height of the bed is 30 -40 cm with the normally used catalyst based on Ni. Catalysts based on other metal such as rhodium, platinum or the like may also be used.

The container is supported by means of resilient supporting means 17 allowing the container to move especially in a vertical direction. On the container 1 a vibrator 18 is mounted in order to provide the necessary movement in the bed between the filler bodies in order to convey the comminuted material downwards through the bed 13 in a sufficient rate to support the production of gas.

The operation of the apparatus is that comminuted biologic material by means of the helical conveyor 4 is introduced into the reactor until a layer of the material has formed on top of the bed 13. When the temperature of the heating element has reached 800 - 1000°C the vibrator is activated so that the comminuted material is distributed into the bed. In the bed a temprature gradient will be obtained with the highest temperature in the lower part close to the heating element and the tubes 10. The comminuted material will be transformed into methane, vapour, carbon dioxide, and carbonmonoxide plus some carbon ash and tar.

Some of the vapour will act with the carbon under consumption of heat to form carbonmonoxide and hydrogen. This conversion seems to take place in an area close to the grating, where the gas leaves the bed. In this area the partial pressure of CO is relativly low, as the gas may escape through the gas outlet, which will change the balance between carbon and carbondioxide on one side and carbon monoxide on the other side in the direction of formation of further carbon monoxide. At the presence of water vapour carbon will be transformed into carbonmonoxide and hydrogen. The heating element 9 and the tubes 10 should be arranged to keep a sufficiently high temperature at the grating to support these reactions. Owing to the fact that during the process the flow of the material and the gas will be in the same direction, very little tar is formed, and due to the presence of the catalyst this tar will be transformed into methane, carbonmonoxide, carbondioxide, and water vapour under consumption of heat. The biological material is therefore converted into a gas with a comparatively high calorific value and an ash, which does not contain carbon. Due to the presence of the catalyst the conversion into gas will take place at a temperature which is about 200°C lower than if no catalyst was used. The lower temperature reduces the demands to the heating and prevents a formation of slags from the ash, as the temperature in the reactor does not exceed the melting point of the ash. As no formation of slags is present, the vibration of the reactor is sufficient to provide the necessary conveying of the comminuted material through the bed and a mutual movement between the filler bodies to keep their surfaces clean and active but without creating an excessive erosion of the bodies. In the process the organic material acts as sort of lubrication between the filler bodies, which reduces the actual contact between the bodies.

The vibration is perfomed in such a way and with such an intensity that the bed is fluidized. In such a fluidized state the filler bodies will be sorted in accordance with their size and specific weight. It is therefore possible to divide the filling into different fractions having specific catalytic effect, heat transmission, or purchase price. The vibraton may be used to provide a division of the bed into different layers in order to increase the efficiency of the reactor or improve the economy depending on what is most important. The vibration may be provided by means of a suitable vibrator of the type comprising a rotating excentric mass. The vibrator may be arranged in such a way that the vibration comprises a vertical component.

It is preferable during the storage of the biological material, for example straw, that the water content is low. Therefore, it may be appropriate to add water vapour to the reactor to supplement the water content, which evaporates from the straw during the heating in the reactor in order to increase the conversion of free carbon formed during the initial pyrolysis. The heat from the gas leaving the reactor at 800°C may be used to produce steam to be indtroduced into the reactor preferably at its upper part, whereby it may support the downward flow of the gas to the outlet below. The dosage of steam may be controlled in such a way that the ash removed from the bottom of the reactor does not contain carbon, but only inorganic matter.

Using a catalyst containing Ni in a reactor of the above type will make it possible to obtain a gas of the composition given below in per cent volume of dry gas from straw:

$CO$      15-30%
$CH_4$      5-25%
$H_2$      20-35%
$CO_2$      10-15%
$N_2$      1% approx.

The produced gas has a low content of tar and may be used without purification for example in a gas burner, a motor or in corresponding apparatuses. The calorific value of the gas is approximatly 15080 KJ/m³.

## Claims

1. Method for production of a gas from a comminuted biological waste material, such as straw, in which method the comminuted material is introduced into a reactor through a gastight lock possibly with an addition of steam and distributed into a reactor bed of catalytic filler bodies, which are agitated in such a way that the material during the gasification is flowing along a predetermined path, as the produced gas and the residual material are removed through the bottom of said bed, characterized in that the bed is heated indirectly, and that the agitation of the catalytic bodies is provided by such a vibration of the bed that the material is conveyed downwards through the bed, the filler bodies being ceramic carriers for a catalytically acting heavy metal.

2. Method according to claim 1, wherein the heavy metal is Ni.

3. Method according to claims 1 or 2, wherein the vibration is performed in such a direction and with such an intensity, that the reactor is fluidized.

4. Method according to claims 1, 2, or 3, wherein the gas is removed through a grating forming the lower limitation of the reactor bed at a temperature of 500°C.

5. Method according to any of the preceding claims, wherein residual organic material is removed through a substantially gastight lock and at least partly used as fuel for heating of the reactor bed.

6. Apparatus for production of gas from a comminuted biological waste material, such as straw, performing the method according to claim 1, which apparatus comprises a reactor cell with an inlet for the biological material through a gastight lock into a reactor bed of filler bodies with catalytic action, which bed comprises means for agitating the bodies in such a way that the comminuted material is conveyed along a predetermined path in the same direction as the gas flow during the gasification, residual material being removed at the bottom of the reactor, characterized in that the reactor bed has heating means for an indirect heating, which heating means are arranged mainly in the flow direction of the material, and that means are provided for vibrating the reactor bed in such a way that the material is conveyed downwards through the reactor bed, the filler bodies being ceramic carriers for a catalytically acting heavy metal.

7. Apparatus according to claim 7, wherein the heavy metal is Ni.

8. Apparatus according to claims 6 or 7, wherein vibrating means are arranged to provide a vertical component to the vibration.

9. Apparatus according to claims 6, 7, or 8, wherein the reactor has an outlet connected with a chamber, the upper limitation of which is a grating.

10. Apparatus according to any of the claims 6 - 9, wherein an outlet comprising a gastight lock for residual material and means for combustion of at least part of the residual material are provided.

## Patentansprüche

1. Verfahren zur Herstellung eines Gases aus zerkleinertem biologischem Abfall, insbesondere Stroh, welchem Verfahren gemäss das zerkleinerte Material in einen Reaktor durch eine gasundurchlässige Schleuse eventuell unter Zugabe von Wasserdampf eingeführt und in einem Reaktorbed aus katalytischen Füllkörper verteilt wird, die auf eine solche Weise bewegt werden, dass das Material während des Vergasens einer vorausgesetzten Bahn in Strömungsrichtung des Gases folgt, wonach das hergestellte Gas sowie das restliche, nicht umgesetzte Material von unten am Boden des Bettes entfernt werden, dadurch gekennzeichnet, dass das Bett indirekt erwärmt wird, und dass die Bewegung der Füllkörper durch eine solche Vibration des Bettes vorgebracht ist, dass das Material nach unten durch das Bett geführt wird, indem die Füllkörper keramische Träger für ein katalytisch wirkendes Schwermetall sind.

2. Verfahren nach Anspruch 1, dadurch gekennzeichnet, dass das Schwermetall Ni ist.

3. Verfahren nach den Ansprüchen 1 oder 2, dadurch gekennzeichnet, dass die Vibration in einer solchen Richtung geschieht und mit einer solchen Intensität, dass das Reaktorbett fluidisiert wird.

4. Verfahren nach den Ansprüchen 1, 2 oder 3, dadurch gekennzeichnet, dass Gas durch einen Rost, der die untere Begrenzung des Reaktorbettes ausmacht, bei einer Temperatur von 500°C ausgenommen wird.

5. Verfahren nach jedem der vorhergehenden Ansprüchen, dadurch gekennzeichnet, dass das restliche, organische Material durch eine im wesentlichen gasundurchlässige Schleuse entfernt und mindestens teilweise als Heizstoff für die Erwärmung des Reaktorbettes verwendet wird.

6. Vorrichtung zur Herstellung eines Gases aus zerkleinertem biologischem Abfall, insbesondere Stroh, unter Ausüben des Verfahrens nach Anspruch 1, welche Vorrichtung eine Reaktorzelle umfasst mit einem Einlass für das biologische Material durch eine gasundurchlässige Schleuse in den Reaktorbett aus katalytisch wirkenden Füllkörpern, welches Bett Mittel aufweist zur Bewegung der Körper auf eine solche Weise, dass das zerkleinerte Material einer vorausbestimmten Bahn entlang geführt wird in derselben Richtung wie der Gasstrom während des Vergasens, indem das restliche Material vom Boden des Reaktors ausgenommen wird, dadurch gekennzeichnet, dass das Reaktorbett Erwärmungsmittel zur indirekten Erwärmung aufweist, welche Erwärmungsmittel hauptsächlich in Strömmungsrichtung des Materials angeordnet sind, und dass Mittel vorgesehen sind zur Vibration des Reaktorbettes auf eine solche Weise, dass das Material nach unten durch das Reaktorbett geführt wird, indem die Füllkörper keramische Träger für das katalysich wirkendes Schwermetall sind.

7. Vorrichtung nach Anspruch 7, dadurch gekennzeichnet, dass das Schwermetall Ni ist.

8. Vorrichtung nach den Ansprüchen 6 oder 7, dadurch gekennzeichnet, dass Mittel zur Vibration versehen sind, um der Vibration eine senkrechte Komponente beizubringen.

9. Vorrichtung nach den Ansprüchen 6, 7 oder 8, dadurch gekennzeichnet, dass das Reaktor mit einem Ablass versehen ist, die mit einer Kammer in Verbindung steht, deren oberen Begrenzung ein Rost ist.

10. Vorrichtung nach jedem der Ansprüche 6 - 9, dadurch gekennzeichnet, dass ein Ablass umfassend eine gasundurchlässige Schleuse für restliches Material und Mittel zum Verbrennen von mindestens einem Teil des restlichen Materials vorgesehen sind.

**Revendications**

1. Procédé de production d'un gaz à partir d'un matériau de déchets biologiques finement hachés, tel que la paille, procédé dans lequel les déchets finement hachés sont introduits dans un réacteur par un sas, étanche aux gaz, éventuellement sous apport de vapeur, et distribués sur un lit de réaction se composant de corps de remplissage à effet catalytique qui sont agités d'une manière telle que pendant la gazification les déchets suivent un chemin prédéterminé, tandis que le gaz produit et le matériau résiduel sont extraits par le fond dudit lit, caractérisé en ce que le lit est indirectement chauffé, et en ce que l'agitation des corps à effet catalytique est obtenue par une telle vibration du lit que le matériau est conduit vers le bas dans le lit, les corps de remplissage étant supports céramiques d'un metal lourd à effet catalytique.

2. Procédé selon la revendication 1, dans lequel le métal lourd est Ni.

3. Procédé selon la revendication 1 ou 2, dans lequel la vibration est effectuée dans une telle direction et avec une telle intensité que le lit de réaction est fluidifié.

4. Procédé selon la revendication 1, 2 ou 3, dans lequel le gaz est extrait à travers une grille constituant la limite inférieure du lit de réaction, D une température de 500°C.

5. Procédé selon une quelconque des revendications précédentes, dans lequel du matériau organique résiduel est extrait par un sas, essentiellement étanche aux gaz, et utilisé, au moins pour partie, comme combustible pour le chauffage du lit de réaction.

6. Appareil de production de gaz à partir d'un matériau de déchets biologiques finement hachés, tel que la paille, pour mise en oeuvre du procédé selon la revendication 1, lequel appareil comprend une cellule de réaction comportant une entrée pour le matériau biologique, par un sas étanche aux gaz, dans un lit de réaction se composant de corps de remplissage à effet catalytique, lequel lit comprend des moyens pour agiter les corps d'une manière telle que le matériau finement haché est conduit par un chemin prédéterminé dans le sens de l'écoulement du gaz pendant la gazification, du matériau résiduel étant extrait par le fond du réacteur, caractérisé en ce que le lit de réaction comprend des moyens de chauffage pour chauffage indirect, lequels moyens de chauffage sont disposés principalement dans la direction d'écoulement du matériau, et en ce que des moyens sont prévus pour la mise en vibration du lit de réaction d'une telle manière que le matériau est dirigé vers le bar à travers le lit de réaction, les corps de remplissage étant supports céramiques pour un métal lourd à effet catalytique.

7. Appareil selon la revendication 7, dans lequel le métal lourd est Ni.

8. Appareil selon la revendication 6 ou 7, dans lequel les moyens de mise en vibration sont concus pour donner à la vibration une composante verticale.

9. Appareil selon la revendication 6, 7 ou 8, dans lequel le réacteur a une sortie reliée à une chambre dont la limite supérieure est une grille.

10. Appareil selon une quelconque des revendications 6 à 9, ayant une sortie comprenant un sas étanche aux gaz pour le matériau résiduel et des moyens pour la combustion d'au moins une partie du materiau residuel.

Outlet

heating

Inlet
heating

Fig. 1

Gas outlet

*Fig.2*